Europäisches Patentamt

European Patent Office

Office européen des brevets

(19)

(11) **EP 0 752 597 B1**

(12) **FASCICULE DE BREVET EUROPEEN**

(45) Date de publication et mention
de la délivrance du brevet:
**30.05.2001 Bulletin 2001/22**

(51) Int Cl.⁷: $G01S\ 7/02$

(21) Numéro de dépôt: **96401457.5**

(22) Date de dépôt: **02.07.1996**

(54) **Circuit de traitement polarimétrique de détection pour récepteur radar**

Polarimetrische Detektorschaltung für einen Radarempfänger

Polarimetric detection processing circuit for a radar receiver

(84) Etats contractants désignés:
**DE FR GB IT**

(30) Priorité: **07.07.1995 FR 9508237**

(43) Date de publication de la demande:
**08.01.1997 Bulletin 1997/02**

(73) Titulaire: **THOMSON-CSF**
**75008 Paris (FR)**

(72) Inventeur: **Durand, Jean-Claude**
**92402 Courbevoie Cedex (FR)**

(74) Mandataire: **Beylot, Jacques et al**
**Thomson-CSF Propriété Intellectuelle,**
**13, Avenue du Président Salvador Allende**
**94117 Arcueil Cédex (FR)**

(56) Documents cités:
**DE-A- 3 907 788** **GB-A- 2 265 515**

## Description

La présente invention concerne les traitements polarimétriques du signal de réception d'un radar en vue d'améliorer la sensibilité de détection des cibles.

Pour améliorer la sensibilité de détection des cibles en technique radar, il a été proposé de prendre en considération la polarisation du champ rétrodiffusé, soit en utilisant des récepteurs radar ayant deux voies parallèles en polarisations croisées, horizontale et verticale ou circulaires droite et gauche, soit en utilisant des émetteurs émettant selon deux polarisations orthogonales successivement ou simultanément avec des codages de modulation permettant de séparer les signaux émis, et de chercher la polarisation pour laquelle le rapport signal sur bruit est le meilleur.

Dans ces techniques de radars polarimétriques, on dispose de deux voies de réception A et B selon deux polarisations orthogonales sur lesquelles sont disponibles des signaux vidéo complexes $Z_A$ et $Z_B$ résultant des opérations classiques, et menées parallèlement dans les deux voies, de transposition de fréquence, de filtrage adapté et de traitement fréquentiel éventuel, Doppler ou VCM (Visualisation de Cible Mobile).

La première étape des traitements polarimétriques usuels consiste toujours, d'une manière ou d'une autre, à évaluer le degré de polarisation et le type de polarisation de la cellule de résolution testée (case distance-vitesse prise en considération) et de son environnement. Cette évaluation se fait, pour chaque cellule de résolution, par la détermination des composantes du vecteur de Stokes $\vec{G}$ à quatre composantes réelles $g_0$, $g_1$, $g_2$, $g_3$ qui sont définies par les expressions :

$$g_0 = |Z_A|^2 + |Z_B|^2$$

$$g_1 = |Z_A|^2 - |Z_B|^2$$

$$g_2 = Z_B \cdot Z_A^* + Z_B^* \cdot Z_A = 2 \cdot \mathrm{Re}\left(Z_B \cdot Z_A^*\right) \qquad (\mathrm{Re} : \text{partie réelle})$$

$$g_3 = \frac{Z_B \cdot Z_A^* - Z_B^* \cdot Z_A}{i} = 2 \cdot \mathrm{Im}\left(Z_B \cdot Z_A^*\right) \qquad (\mathrm{Im} : \text{partie imaginaire})$$

la composante $g_0$ représentant la puissance du signal reçu, et les composantes $g_1$, $g_2$ et $g_3$ normées par la composante $g_0$ les coordonnées d'un vecteur dont le module p :

$$p = \sqrt{\frac{g_1^2 + g_2^2 + g_3^2}{g_0^2}}$$

est représentatif du degré de polarisation et dont l'orientation dans la sphère de Poincaré est représentative du type de polarisation. Si la voie de réception A est une voie de polarisation circulaire gauche et la voie de réception B une voie de polarisation circulaire droite, la coordonnée $g_2$ définit sur la sphère de Poincaré un diamètre orienté positivement vers le point de l'équateur correspondant à une polarisation horizontale et négativement vers le point de l'équateur correspondant à une polarisation verticale et la coordonnée $g_1$ un autre diamètre de la sphère de Poincaré orthogonal au précédent orienté positivement vers le point polaire correspondant à une polarisation circulaire gauche et négativement vers le point polaire correspondant à une polarisation circulaire droite. L'emplacement, plus ou moins à l'intérieur de la sphère de Poincaré, du point de coordonnées $g_1$, $g_2$, $g_3$ normées par la composante $g_0$ donne le degré de polarisation qui est d'autant plus important que le point se rapproche de la surface de la sphère.

Pour évaluer l'ambiance polarimétrique du fouillis, on détermine les composantes du vecteur de Stokes dans les cellules de résolution voisines de la cellule de résolution en cours d'analyse pour la détection de cible, soit le long de l'axe distance si l'on s'intéresse aux échos mobiles sélectionnés par traitement Doppler, soit le long de l'axe temporel, de tour d'antenne à tour d'antenne, dans le cas d'une carte de fouillis destinée à la détection de cibles lentes ou vues par le travers, et on en fait la moyenne.

Pour faire ressortir les échos de l'ambiance polarimétrique du fouillis on connaît essentiellement trois techniques :

- le filtre polarimétrique réjecteur,
- le banc de filtres polarimétriques et
- le TFAC (détecteur à Taux de Fausse Alarme Constant) polarimétrique, connu par exemple du document DE 39 07 788.

Un filtre polarimétrique réalise une combinaison linéaire des signaux complexes $Z_A$ et $Z_B$ reçus sur les deux accès orthogonalement polarisés du récepteur du radar. Cette opération revient à doter l'antenne d'une polarisation de réception virtuelle ê accordable à volonté par action sur les coefficients complexes de la combinaison linéaire choisie : le signal Z en sortie du filtre n'est autre que la composante du champ incident selon l'axe de polarisation défini par ê. En utilisant le vecteur de Stokes $\vec{G}$ de composantes $[g_0, g_1, g_2, g_3]$ correspondant au champ rétrodiffusé dans la cellule de résolution en cours d'analyse et en notant par $[1, \alpha, \beta, \gamma]$ les composantes du vecteur de Stokes unitaire $\vec{H}$ correspondant à la polarisation défini par ê, on peut montrer que la puissance du signal en sortie d'un filtre polarimétrique correspond au demi-produit scalaire F du vecteur $\vec{G}$ par le vecteur $\vec{H}$ :

$$F = \frac{\vec{H}.\vec{G}}{2}$$

ou encore :

$$F = \frac{1}{2}(g_0 + \alpha.g_1 + \beta.g_2 + \gamma.g_3)$$

Cette puissance de signal de sortie est extraite par un circuit d'extraction de module traitant les composantes en phase et en quadrature du signal complexe de sortie du filtre polarimétrique, comme cela se passe en l'absence de filtre polarimétrique, et comparée à un seuil de détection fonction de la probabilité de fausse alarme $P_{fa}$ souhaitée pour détecter la présence de cible.

Un filtre polarimétrique pris isolément, tout comme une antenne monopolarisation, possède une polarisation "aveugle" : tout écho de polarisation orthogonale à celle du filtre ou de l'antenne, quelle que soit son intensité, ne donne lieu en sortie à aucun signal. Selon le point de vue adopté, élimination des parasites ou détection des cibles, c'est un avantage ou un inconvénient.

Pour obtenir un filtre polarimétrique réjecteur, il suffit de choisir pour le filtre polarimétrique une polarisation ê orthogonale à la polarisation estimée du fouillis. Si $[g_{f0}, g_{f1}, g_{f2}, g_{f3}]$ sont les composantes du vecteur de Stokes $\vec{G}_f$ du fouillis qui sont, comme on l'a vu précédemment, les composantes moyennes des vecteurs de Stokes du champ rétrodiffusé dans les cellules de résolution voisines de la cellule analysée et $p_f$ le degré de polarisation du fouillis :

$$p_f = \sqrt{\frac{g_{f1}^2 + g_{f2}^2 + g_{f3}^2}{g_{f0}^2}}$$

Cela revient à adopter pour composantes du vecteur de Stokes unitaire H du filtre polarimétrique réjecteur les valeurs :

$$\vec{H} = \begin{bmatrix} 1 \\ -\dfrac{g_{f1}}{g_{f0}.p_f} \\ -\dfrac{g_{f2}}{g_{f0}.p_f} \\ -\dfrac{g_{f3}}{g_{f0}.p_f} \end{bmatrix}$$

puisque deux polarisations orthogonales sont représentées sur la sphère de Poincaré en des points diamétralement opposés.

La puissance moyenne $F_f$ en sortie du filtre polarimétrique pour une cellule de résolution ne contenant que du fouillis est alors égale à :

$$F_f = \frac{1}{2}\left( g_{f0} - \frac{g_{f1}^2}{g_{f0} \cdot P_f} - \frac{g_{f2}^2}{g_{f0} \cdot P_f} - \frac{g_{f3}^2}{g_{f0} \cdot P_f} \right)$$

ce qui s'écrit aussi:

$$F_f = \frac{1}{2}(1 - p_f)g_{f0}$$

Cette puissance est minimale et correspond à la moitié de la puissance de la composante non polarisée du fouillis car cette dernière est également répartie entre la polarisation ê du filtre et la polarisation orthogonale.

Dans une ambiance de fouillis non polarisée ($p_f$=0), un filtre polarimétrique réjecteur est inopérant, la puissance résiduelle du fouillis devenant alors indépendante du choix de la polarisation de filtrage ê et atteignant la moitié de la puissance totale véhiculée par les deux accès de l'antenne. L'intérêt du filtre polarimétrique réjecteur croît avec le degré de polarisation du fouillis. Cependant, le filtre polarimétrique réjecteur a l'inconvénient d'être aveugle aux cibles rétrodiffusant un champ de même polarisation que le fouillis.

Un banc de filtres polarimétriques consiste en un groupement en parallèle de plusieurs filtres polarimétriques aux polarisations figées, choisies régulièrement réparties sur la sphère de Poincaré, suivis individuellement d'un extracteur de module et d'un détecteur TFAC à taux de fausse alarme constant, un circuit logique de type "ou" réunissant les sorties des différents détecteurs et effectuant la fusion logique des détections ou présences élémentaires de cibles.

Le cumul des détections ou présences élémentaires de cibles effectuées par les différents détecteurs équivaut à la sélection du filtre polarimétrique assurant le meilleur rapport signal sur fouillis alors qu'un filtre polarimétrique réjecteur ne fait que minimiser le niveau de fouillis. Le banc de filtres polarimétriques est ainsi une réalisation approchée du "filtre polarimétrique adapté", l'approximation étant d'autant meilleure que les filtres polarimétriques employés sont nombreux et assurent un échantillonnage représentatif et dense de l'espace des polarisations.

A mesure que le degré de polarisation du fouillis augmente, le filtre polarimétrique adapté tend à se confondre avec le filtre polarimétrique réjecteur. On le comprend aisément en considérant le cas extrême du fouillis entièrement polarisé ($p_f$=1) pour lequel la puissance résiduelle du fouillis en sortie du filtre polarimétrique réjecteur est nulle et le rapport signal sur fouillis infini.

Un banc de filtres polarimétriques est donc bien adapté pour des des fouillis peu ou moyennement polarisés. Par ailleurs, il convient bien aux échos utiles faibles. Cependant, le résidu de fouillis en sortie d'un filtre polarimétrique réjecteur étant très sensible à l'ajustement précis de la polarisation "aveugle" sur celle du fouillis, on conçoit que, dans une ambiance très polarisée, un banc de filtres polarimétriques est une solution lourde, car, dans la nécessité d'assurer un maillage suffisamment fin de la sphère des polarisations de Poincaré, il doit comporter un grand nombre de filtres.

Conceptuellement, le TFAC polarimétrique comporte un circuit de changement de base agissant sur le signal vectoriel ayant pour composantes les signaux $Z_A$, $Z_B$ présents sur les deux accès de réception du radar pour l'exprimer avec deux nouvelles composantes $E_P$ et $E_Q$ dans la base des polarisations propres P et Q du fouillis (polarisations parallèle et orthogonale à celle du fouillis), deux circuits de pondération disposés chacun sur une voie de sortie du circuit de changement de base et effectuant une pondération en $1/\sqrt{\lambda}$, et respectivement $1/\sqrt{\mu}$, inversement proportionnelle à la racine carrée de la puissance estimée du fouillis dans la voie considérée P respectivement Q, deux circuits d'extraction de module, un circuit de sommation connecté aux sorties des deux circuits d'extraction de module et un détecteur TFAC.

Le circuit de changement de base est composé de deux filtres polarimétriques, l'un avec la polarisation du fouillis et l'autre avec une polarisation orthogonale à celle du fouillis qui est alors un filtre polarimétrique réjecteur de fouillis. Le paramètre $\lambda$ intervenant dans la pondération de la voie issue du filtre polarimétrique ayant la polarisation du fouillis, est proportionnel à la puissance estimée du fouillis en sortie de ce filtre polarimétrique :

$$\lambda = \frac{1}{2}(1 + p_f)$$

car le vecteur de Stockes unitaire $\vec{L}$ de ce filtre polarimétrique à polarisation identique à celle du fouillis a pour composantes :

$$\bar{L} = \begin{bmatrix} 1 \\ g_{f1}/g_{f0}\cdot p_f \\ g_{f2}/g_{f0}\cdot p_f \\ g_{f3}/g_{f0}\cdot p_f \end{bmatrix}$$

et la puissance moyenne de fouillis en sortie de ce filtre vérifie :

$$\frac{1}{2}\vec{L}.\vec{G} = \frac{1}{2}(1+p_f)g_{f0}$$

Le paramètre de pondération $\mu$ vaut quant à lui :

$$\mu = \frac{1}{2}(1-p_f)$$

puisque l'on a vu que la puissance moyenne de fouillis en sortie d'un filtre polarimétrique à polarisation orthogonale au fouillis valait :

$$\frac{1}{2}(1 - p_f)g_{f0}$$

En sorties des circuits de pondération, le fouillis polarisé incident est transformé en un processus non polarisé. Un tel traitement n'entraîne pas de polarisation aveugle. Pourvu qu'il soit suffisamment fort, un écho de cible de même polarisation que le fouillis peut être détecté car il apparaît sur la voie P de traitement. On montre en fait que le TFAC polarimétrique est optimal pour les forts rapports signal/fouillis. Par ailleurs, contrairement au cas du filtre réjecteur, ce traitement reste efficace dans une ambiance non polarisée.

En résumé, l'efficacité des traitements polarimétriques que l'on connaît dépend du degré de polarisation du fouillis et de la puissance de l'écho utile de sorte qu'aucun traitement n'est optimal dans tous les cas de fouillis.

La présente invention a pour but de lutter contre cet inconvénient.

Elle a pour objet un circuit de traitement polarimétrique de détection de cible pour récepteur radar remarquable en ce qu'il comporte au moins, en parallèle, un TFAC polarimétrique pourvu d'une sortie de détection de cible, et un filtre polarimétrique réjecteur de fouillis associé à un détecteur TFAC pourvu d'une sortie de détection de cible, avec un circuit logique de type "ou" réunissant les sorties de détection de cible du TFAC polarimétrique et du détecteur TFAC.

Avantageusement, le circuit de traitement polarimétrique de détection de cible comporte, en parallèle, un TFAC polarimétrique pourvu d'une sortie de détection de cible, un filtre polarimétrique réjecteur de fouillis associé à un détecteur TFAC pourvu d'une sortie de détection de cible et un banc de filtres polarimétriques associés à des détecteurs TFAC pourvus de sorties de détection de cible, avec un circuit logique de type "ou" réunissant les différentes sorties de détection de cible et un circuit de sélection activant le filtre polarimétrique réjecteur de fouillis et inhibant le banc de filtres polarimétriques lorsque le degré de polarisation du fouillis dépasse un certain seuil et réciproquement inhibant le filtre polarimétrique réjecteur de fouillis et activant le banc de filtres polarimétriques lorsque le degré de polarisation du fouillis est inférieur au-dit seuil.

D'autres caractéristiques et avantages de l'invention ressortiront de la description ci-après d'un mode de réalisation donné à titre d'exemple. Cette description sera faite en regard du dessin dans lequel :

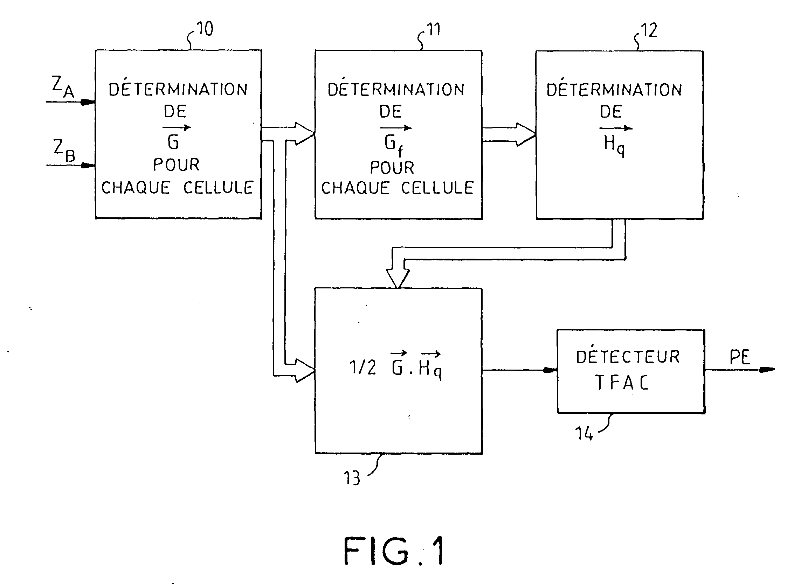

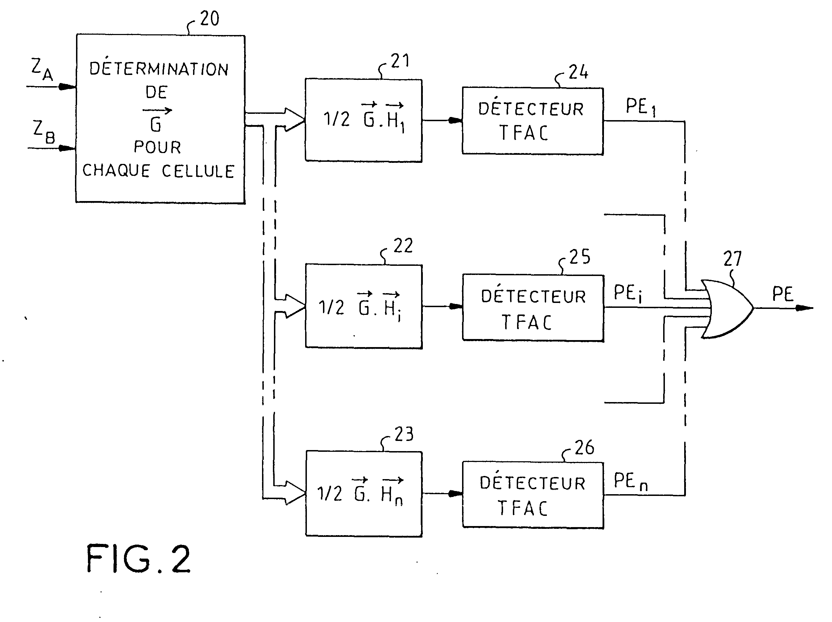

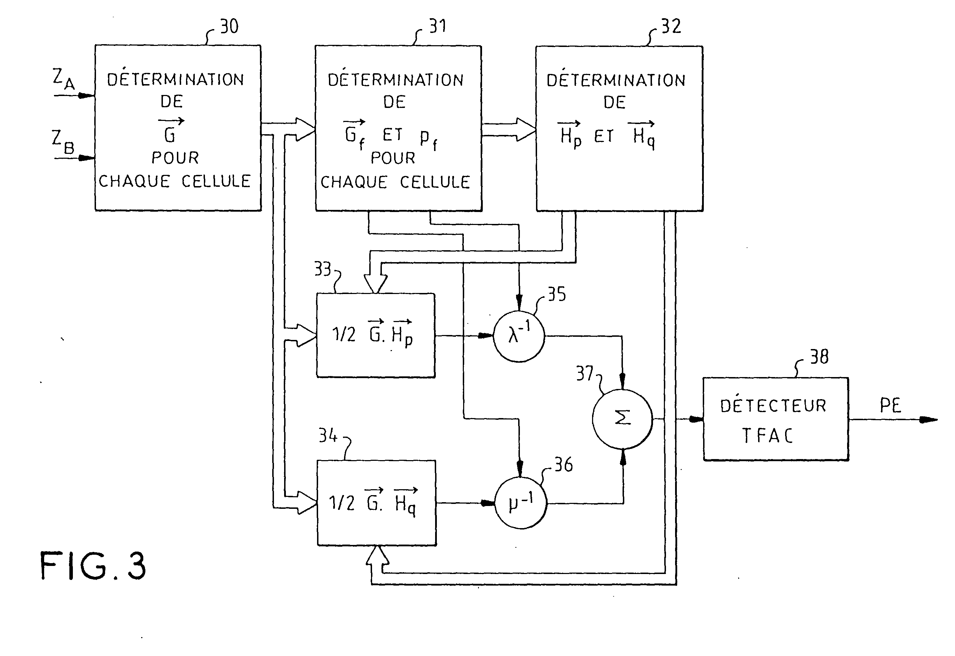

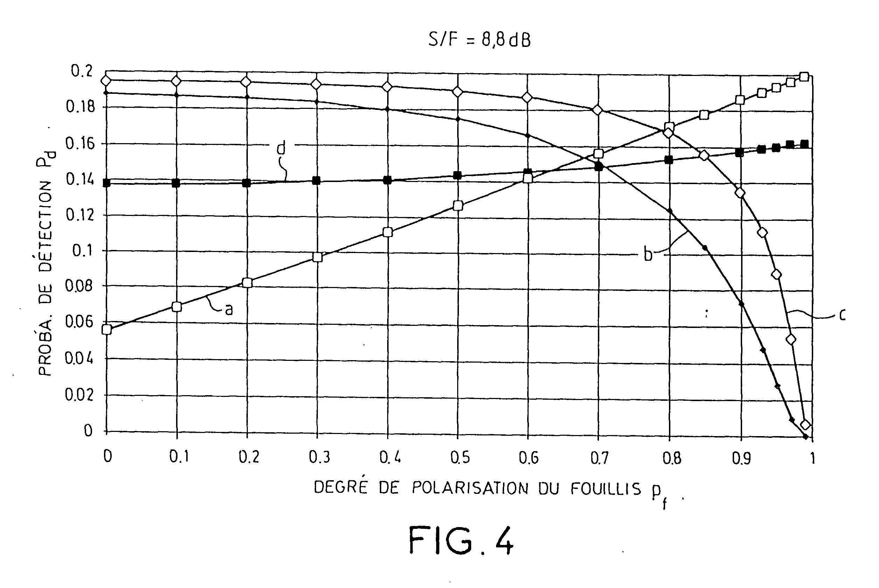

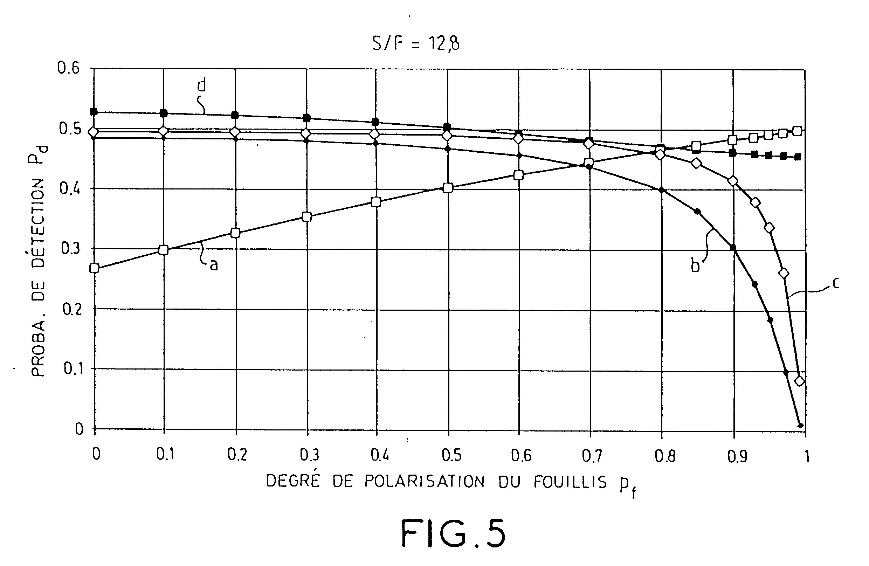

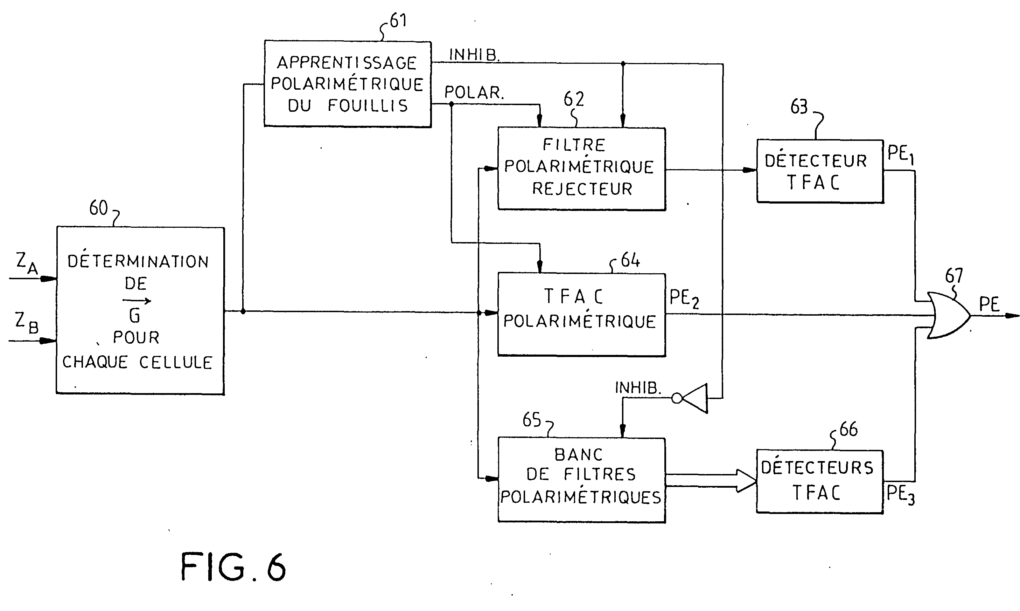

- une figure 1 illustre, de manière schématique, un circuit de traitement assurant la fonction d'un filtre polarimétrique réjecteur de fouillis en amont d'un détecteur TFAC ;
- une figure 2 illustre, de manière schématique, un autre circuit de traitement assurant la fonction d'un banc de filtres polarimétriques associés à des détecteurs TFAC dont les sorties sont couplées par un circuit logique de type "ou" ;
- une figure 3 illustre, de manière schématique, un autre circuit de traitement assurant la fonction d'un TFAC polarimétrique ;
- des figures 4 et 5 sont des diagrammes de courbes de probabilité de détection en fonction des types de traitement polarimétrique ; et
- une figure 6 illustre, de manière schématique, un circuit de traitement polarimétrique selon l'invention.

Le circuit de traitement polarimétrique de la figure 1 assurant une fonction de filtre polarimétrique réjecteur de fouillis en amont d'un détecteur TFAC comporte en entrée, un circuit 10 de détermination des composantes du vecteur de Stokes $\vec{G}$ pour chaque cellule de résolution du radar, suivi d'un circuit 11 de détermination des composantes du vecteur de stokes $\vec{G}_f$ du fouillis entourant chaque cellule de résolution du radar, d'un circuit 12 de détermination des composantes du vecteur de Stokes $\vec{H}_Q$ unitaire de la polarisation orthogonale à celle du fouillis, d'un circuit 13 d'élaboration du produit scalaire $^1/_2\vec{G}.\vec{H}_Q$ et d'un détecteur TFAC 14.

Le circuit 10 de détermination des composantes du vecteur de Stokes $\vec{G}$ pour chaque cellule de résolution du radar opère à partir des signaux vidéo complexes $Z_A$ et $Z_B$ disponibles sur les deux voies de réception en polarisations croisées du radar, et détermine les composantes $[g_0, g_1, g_2, g_3]$ du vecteur de Stokes $\vec{G}$ en mettant en oeuvre les relations de définition :

$$
\left\{
\begin{aligned}
g_0 &= \left|Z_A\right|^2 + \left|Z_B\right|^2 \\[2mm]
g_1 &= \left|Z_A\right|^2 - \left|Z_B\right|^2 \\[2mm]
g_2 &= Z_B \cdot Z_A^* + Z_B^* \cdot Z_A = 2 \cdot \mathrm{Re}\left(Z_B \cdot Z_A^*\right) \quad (\text{Re : partie réelle}) \qquad (1) \\[2mm]
g_3 &= \frac{Z_B \cdot Z_A^* - Z_B^* \cdot Z_A}{i} = 2 \cdot \mathrm{Im}\left(Z_B \cdot Z_A^*\right) \quad (\text{Im : partie imaginaire})
\end{aligned}
\right.
$$

Le circuit 11 de détermination des composantes du vecteur de Stokes $\vec{G}_f$ du fouillis entourant chaque cellule de résolution détermine les composantes $[g_{f0}, g_{f1}, g_{f2}, g_{f3}]$ du vecteur de Stokes $\vec{G}_f$ du fouillis en établissant les composantes moyennes des vecteurs de Stokes $\vec{G}$ des cellules de résolution entourant la cellule de résolution en analyse pour la détection de cible.

Le circuit 12 de détermination du vecteur de Stokes $\vec{H}_Q$ unitaire de la polarisation orthogonale à celle du fouillis détermine les composantes $[1, \alpha, \beta, \gamma]$ du vecteur de Stokes $\vec{H}_Q$ à partir des relations :

$$
\left\{
\begin{aligned}
\alpha &= -\frac{g_{f1}}{g_{f0} \cdot p_f} \\[2mm]
\beta &= -\frac{g_{f2}}{g_{f0} \cdot p_f} \\[2mm]
\gamma &= -\frac{g_{f3}}{g_{f0} \cdot p_f}
\end{aligned}
\right.
$$

avec

$$p_f = \sqrt{\frac{g_{f1}^2 + g_{f2}^2 + g_{f3}^2}{g_{f0}^2}}$$

Le circuit 13 d'élaboration du produit scalaire délivre pour chaque cellule de résolution examinée, un signal réel représentatif d'une puissance d'écho reçu dans une polarisation orthogonale à celle du fouillis et joue donc le rôle d'un filtre polarimétrique réjecteur. Ce signal qui a pour valeur :

$$\frac{1}{2}\vec{G}.\vec{H}_Q = g_0 + \alpha.g_1 + \beta.g_2 + \gamma.g_3$$

est soumis au détecteur TFAC 14 de constitution classique engendrant un signal binaire de détection de cible PE.

Comme indiqué précédemment, un tel circuit à filtre polarimétrique réjecteur est optimal en cas de fouillis fortement polarisé mais inefficace en présence d'un fouillis non polarisé et aveugle aux cibles ayant la même polarisation que le fouillis.

Le circuit de traitement polarimétrique de la figure 2 assurant la fonction d'un banc de filtres polarimétriques associés à des détecteurs TFAC dont les sorties sont couplées par un circuit logique de type "ou" comporte un circuit 20 de détermination des composantes du vecteur de Stokes $\vec{G}$ pour chaque cellule de résolution du radar, suivi de plusieurs circuits 21, 22, 23 d'élaboration de produit scalaire avec des vecteurs de Stokes unitaires $\vec{H}_i$ correspondant à diverses directions de polarisation régulièrement réparties sur la sphère de Poincaré, de détecteurs TFAC 24, 25, 26 connectés individuellement aux sorties des circuits d'élaboration de produit scalaire 21, 22, 23, et d'un circuit logique de type "ou" 27 réunissant les sorties de détection de cible des différents détecteurs TFAC 24, 25, 26.

Le circuit 20 de détermination des composantes [$g_0$, $g_1$, $g_2$, $g_3$] du vecteur de Stokes $\vec{G}$ est l'analogue du circuit 10 de la figure 1 et procède à l'aide des mêmes relations de définition (1).

Les circuits 21, 22, 23 d'élaboration de produit scalaire sont analogues à celui 11 de la figure 1 mais, contrairement à ce dernier, ils opèrent avec des vecteurs de Stokes unitaires $\vec{H}_i$ figés choisis une fois pour toutes de manière à correspondre à des polarisations régulièrement réparties sur la sphère de Poincaré. Ils engendrent des signaux représentatifs de la puissance d'écho reçu dans différentes polarisations échantillonnant les différents types de polarisation possibles et jouent le rôle d'un banc de filtres polarimétriques.

Les détecteurs TFAC 24, 25, 26 de constitution classique, engendrent un signal binaire de détection de cible fonction du franchissement ou non de leurs seuils ajustés pour un taux de fausse alarme constant.

Le circuit logique de type "ou" 27 réunit les sorties de détection de cible PE$_i$ des différents détecteurs TFAC 24, 25, 26 sur une sortie commune PE où sont fusionnées toutes les détections de cible.

Comme indiqué précédemment, un tel circuit à banc de filtres polarimétriques est optimal pour des échos utiles faibles et des fouillis peu ou moyennement polarisés. Par contre, avec des fouillis très polarisés, leur efficacité baisse car le résidu de fouillis en sortie des filtres polarimétriques est très sensible à l'ajustement de la polarisation du filtre sur sa polarisation "aveugle".

Le circuit de traitement polarimétrique de la figure 3 assurant la fonction d'un TFAC polarimétrique comporte

- un circuit 30 de détermination des composantes du vecteur de Stokes $\vec{G}$ pour chaque cellule de résolution du radar suivi d'un circuit 31 de détermination des composantes du vecteur de stokes $\vec{G}_f$ et du degré de polarisation $p_f$ du fouillis entourant chaque cellule de résolution du radar, d'un circuit 32 de détermination des composantes des vecteurs de Stokes unitaires $\vec{H}_P$ et $\vec{H}_Q$ des polarisations parallèle et orthogonale à celle du fouillis,
- deux circuits 33, 34 d'élaboration des produits scalaires $^1/_2\vec{G}.\vec{H}_P$ et $^1/_2\vec{G}.\vec{H}_Q$ suivis chacun par un circuit de pondération 35, 36,
- un circuit sommateur 37 effectuant la somme des signaux issus des circuits de pondération 35, 36 en provenance des circuits 33, 34 d'élaboration de produit scalaire, et
- un détecteur TFAC 38 connecté en sortie du circuit sommateur 37.

Le circuit 30 de détermination des composantes [$g_0$, $g_1$, $g_2$, $g_3$] du vecteur de Stokes $\vec{G}$ est l'analogue du circuit 10 de la figure 1 et procède à l'aide des mêmes relations de définition (1).

Le circuit 31 de détermination des composantes du vecteur de Stokes $\vec{G}_f$ et du degré de polarisation $p_f$ du fouillis entourant chaque cellule de résolution détermine les composantes [$g_{f0}$, $g_{f1}$, $g_{f2}$, $g_{f3}$] du vecteur de Stokes $\vec{G}_f$ du fouillis en établissant les composantes moyennes des vecteurs de Stokes $\vec{G}$ des cellules de résolution entourant la cellule de résolution considérée et le degré de polarisation $p_f$ du fouillis à l'aide de la relation de définition :

$$p_f = \sqrt{\frac{g_{f1}^2 + g_{f2}^2 + g_{f3}^2}{g_{f0}^2}}$$

Le circuit 32 de détermination des composantes des vecteurs de Stokes unitaires $\vec{H}_P$ et $\vec{H}_Q$ de polarisations parallèle et orthogonale à celle du fouillis détermine les composantes [1, -$\alpha$, -$\beta$, -$\gamma$] du vecteur de Stokes $\vec{H}_P$ unitaire de la polarisation du fouillis et [1, $\alpha$, $\beta$, $\gamma$] du vecteur de Stokes unitaire $\vec{H}_Q$ de la polarisation orthogonale à celle du fouillis en mettant en oeuvre la relation de définition :

$$\begin{cases} \alpha = -\dfrac{g_{f1}}{g_{f0}\cdot p_f} \\[2em] \beta = -\dfrac{g_{f2}}{g_{f0}\cdot p_f} \\[2em] \gamma = -\dfrac{g_{f3}}{g_{f0}\cdot p_f} \end{cases}$$

Le circuit 33 d'élaboration du produit scalaire $\frac{1}{2}\vec{G}.\vec{H}_P$ délivre pour chaque cellule de résolution examinée, un signal réel représentatif d'une puissance d'écho reçu dans une polarisation parallèle à celle du fouillis. Ce signal a pour valeur :

$$\frac{1}{2}\vec{G}.\vec{H}_P = g_0 - \alpha.g_1 - \beta.g_2 - \gamma.g_3$$

Le circuit 34 d'élaboration du produit scalaire $\frac{1}{2}\vec{G}.\vec{H}_Q$ délivre pour chaque cellule de résolution examinée, un signal réel représentatif d'une puissance d'écho reçu dans une polarisation orthogonale à celle du fouillis et joue le rôle d'un filtre polarimétrique réjecteur de fouillis. Ce signal a pour valeur :

$$\frac{1}{2}\vec{G}.\vec{H}_Q = g_0 + \alpha.g_1 + \beta.g_2 + \gamma.g_3$$

Les circuits de pondération 35 et 36 ramènent au même niveau les puissances de fouillis disponibles en sortie des circuits 33 et 35 d'élaboration de produit scalaire en multipliant le signal de sortie du circuit d'élaboration de produit scalaire 33 par le coefficient :

$$\lambda^{-1} = \frac{2}{1 + p_f}$$

et le signal de sortie du circuit d'élaboration de produit scalaire 34 par le coefficient :

$$\mu^{-1} = \frac{2}{1 - p_f}$$

de manière à se ramener en présence d'un processus non polarisé pour ce qui concerne le fouillis.

Le sommateur 37 ajoute les deux signaux délivrés par les circuits de pondération 35, 36 et applique le signal résultant à l'entrée du détecteur TFAC 38 qui est de conception classique et délivre en sortie un signal binaire PE de détection de cible fonction du franchissement ou non de son seuil ajusté pour un taux de fausse alarme constant.

Un tel circuit TFAC polarimétrique est optimal pour un écho utile puissant.

L'efficacité des circuits de traitement polarimétrique décrits précédemment relativement aux figures 1 à 3 est variable en fonction du rapport signal à fouillis et du degré de polarisation du fouillis.

On se propose ici, pour obtenir une efficacité optimale dans tous les cas, soit de sélectionner le traitement polarimétrique convenable, soit d'associer, par fusion logique, des traitements polarimétriques différents, soit à combiner les deux types d'actions précédents tout en limitant l'accroissement de complexité qui en découle.

Ces associations et sélections sont déterminées d'après un ou plusieurs paramètres critiques, fonction de la polarisation mesurée du fouillis, en vue d'augmenter la probabilité de détection d'un écho utile.

Les associations plus spécialement envisagées concernent des traitements de natures différentes aux complémentarités certaines, comme le filtre polarimétrique réjecteur et le TFAC polarimétrique. En effet, la fusion de traitements polarimétriques de natures semblables est d'intérêt moindre : l'association d'un banc de filtres polarimétriques et du filtre polarimétrique réjecteur, par exemple, n'aboutirait en fin de compte qu'à un banc de filtre polarimétriques particulier avec, il est vrai, une composante adaptative.

Les diagrammes de courbes des figures 4 et 5 donnent un aperçu des complémentarités des différents traitements polarimétriques. Ils sont établis dans le cadre de signaux gaussiens et d'un écho utile non polarisé ou de polarisation inconnue a priori comme c'est le cas pour un radar émettant en polarisation circulaire, et pour une probabilité de fausse alarme de $10^{-6}$.

Leurs courbes représentent, en fonction du degré $p_f$ de polarisation du fouillis, la probabilité de détection Pd des différents traitements polarimétriques. Elles sont indexées par a pour le filtre polarimétrique réjecteur, par b pour un banc de 12 filtres polarimétriques à polarisations régulièrement réparties sur la sphère des polarisations de Poincaré, par c pour un banc de 32 filtres polarimétriques à polarisations régulièrement réparties sur la sphère de Poincaré et par d pour le TFAC polarimétrique.

Le diagramme des courbes de la figure 4 est établi pour un rapport signal sur fouillis faible égal à 8,8 dB. Il montre que, dans ce cas, les bancs de filtres polarimétriques sont les plus efficaces sur une vaste plage de degrés de polarisation du fouillis mais que le filtre polarimétrique réjecteur finit par l'emporter au-delà d'un degré de polarisation de fouillis $p_f$ de 0,8. On note également l'infériorité systématique du TFAC polarimétrique sur les solutions à base de filtres polarimétriques.

Le diagramme des courbes de la figure 5 est établi pour un rapport signal sur fouillis moyen égal à 12,8 dB correspondant aux limites conventionnelles de la portée radar. Il montre que, dans ce cas, la meilleure efficacité est obtenue avec le TFAC polarimétrique pour un degré de polarisation du fouillis $p_f$ inférieur à 0,824 et avec le filtre polarimétrique réjecteur au-delà.

On voit également sur les diagrammes des figures 4 et 5 par comparaison des courbes a et b, que l'efficacité du banc de 12 filtres polarimétriques est meilleure que celle du filtre polarimétrique réjecteur en deçà d'une valeur de degré de polarisation du fouillis $p_f$ de l'ordre de 0,68.

Pour tirer avantage de ces constatations, on propose un traitement polarimétrique utilisant en parallèle le TFAC polarimétrique et, soit le banc de filtres polarimétriques si le degré de polarisation du fouillis est inférieur à un seuil compris dans une plage de 0,6 à 0,8 et pris de préférence égal à 0,68 pour un banc de filtres polarimétriques de taille moyenne comportant dix à quinze filtres, soit le filtre polarimétrique réjecteur si le degré de polarisation du fouillis excède ce dernier seuil.

La figure 6 illustre, de manière schématique, un exemple de mise en oeuvre d'un tel traitement polarimétrique. On y distingue : un circuit 60 de détermination des composantes du vecteur de Stokes $\vec{G}$ pour chaque cellule de résolution du radar, un circuit 61 d'apprentissage polarimétrique du fouillis, un filtre polarimétrique réjecteur 62 associé à un détecteur TFAC 63 et un TFAC polarimétrique 64 pilotés par une commande "polar" du circuit 61 d'apprentissage polarimétrique du fouillis, un banc 65 de filtres polarimétriques associés à des détecteurs TFAC 66 et activés ou inhibés en opposition avec le filtre polarimétrique réjecteur 62 par une commande "inhib" du circuit 61 d'apprentissage polarimétrique et un circuit logique de type "ou" 67 rassemblant les sorties de détection de cible $PE_1$ du détecteur TFAC 63 placé en aval du filtre polarimétrique réjecteur 62, $PE_2$ du TFAC polarimétrique 64 et $PE_3$ des détecteurs TFAC 66 placés en aval des filtres polarimétriques du banc 65 en une sortie commune de détection de cible PE.

Le circuit 60 de détermination des composantes [$g_0$, $g_1$, $g_2$, $g_3$] du vecteur de Stokes $\vec{G}$ pour chaque cellule de résolution du radar, qui est placé en tête, est l'analogue du circuit 10 de la figure 1 et procède à l'aide des mêmes relations de définition (1).

Le circuit 61 d'apprentissage polarimétrique comporte

- un circuit de détermination des composantes du vecteur de Stokes $\vec{G}_f$ du fouillis commun avec le filtre polarimétrique réjecteur 62 et le TFAC polarimétrique 63 qui est analogue à celui 11 du circuit de traitement à filtre polarimétrique réjecteur de la figure 1 (ce circuit de détermination des composantes du vecteur de Stokes $\vec{G}_f$ du fouillis délivre en tant que commande "polar" les composantes du vecteur de Stokes $\vec{G}_f$ du fouillis)
- un circuit de détermination du degré de polarisation $p_f$ du fouillis placé à la suite du circuit de détermination des composantes du vecteur de Stokes $\vec{G}_f$ du fouillis et
- un circuit à seuil engendrant l'ordre d'inhibition "inhib" fonction du dépassement ou non par le degré de polarisation du fouillis $p_f$ d'un seuil de déclenchement fixé au voisinage de la valeur de 0,68.

Le filtre polarimétrique réjecteur 62 associé au détecteur TFAC 63 a une constitution analogue à celle du circuit de traitement polarimétrique à filtre polarimétrique réjecteur de la figure 1, à l'exception du fait qu'il partage son circuit de détermination des composantes du vecteur de Stokes $\vec{G}$ des cellules de résolution du radar avec le circuit d'apprentissage polarimétrique du fouillis 61, le TFAC polarimétrique 64 et le banc de filtres polarimétriques 65, son circuit de détermination des composantes du vecteur de Stokes $\vec{G}_f$ du fouillis avec le circuit d'apprentissage polarimétrique du fouillis 61 et le TFAC polarimétrique 64, et son circuit de détermination des composantes du vecteur de Stokes unitaire $\vec{H}_Q$ de polarisation orthogonale à celle du fouillis avec le TFAC polarimétrique 64, et du fait que son circuit d'élaboration de produit scalaire est pourvu d'une commande d'inhibition mettant sa sortie au niveau zéro lorsque le signal d'inhibition engendré par le circuit d'apprentissage de polarisation du fouillis 61 correspond à un degré de polarisation du fouillis $p_f$ inférieur au seuil de déclenchement.

Le TFAC polarimétrique 64 a une constitution analogue à celle du circuit de traitement polarimétrique de la figure 3 remplissant la fonction de TFAC polarimétrique à l'exception du fait qu'il partage certains de ses éléments avec le circuit d'apprentissage polarimétrique du fouillis 61, le filtre polarimétrique réjecteur 62 et le banc de filtres polarimétriques 65.

Le banc de filtres polarimétriques 65 associés aux détecteurs TFAC 66 a une constitution analogue à celle du circuit de traitement polarimétrique de la figure 2 remplissant la fonction de banc de filtres polarimétriques à l'exception du fait qu'il partage son circuit de détermination des composantes du vecteur de Stokes $\vec{G}$ des cellules de résolution du radar avec le circuit d'apprentissage polarimétrique du fouillis 61, le filtre polarimétrique réjecteur 62 et le TFAC polarimétrique 64, et du fait que ses circuits d'élaboration de produit scalaire sont pourvus d'une commande d'inhibition mettant leur sortie au niveau zéro lorsque le signal d'inhibition "inhib" engendré par le circuit d'apprentissage de polarisation du fouillis 61 correspond à un degré de polarisation du fouillis $p_f$ supérieur au seuil de déclenchement.

Le circuit de traitement polarimétrique de la figure 6 permet de bénéficier des avantages propres au TFAC polarimétrique, au filtre polarimétrique réjecteur et au banc de filtres polarimétriques pris isolément, c'est-à-dire :

- de l'absence de polarisation "aveugle du TFAC polarimétrique,
- de l'optimalité du TFAC polarimétrique pour les échos utiles puissants,
- de l'optimalité du filtre polarimétrique réjecteur en cas de fouillis fortement polarisé et
- de l'optimalité du banc de filtre polarimétrique pour les échos utiles faibles et les fouillis peu ou moyennement polarisés.

Le fait d'associer dans un même circuit de traitement polarimétrique un TFAC polarimétrique, un filtre polarimétrique réjecteur et un banc de filtres polarimétriques n'accroît que peu la charge de calcul du processeur de signal du radar. En effet, l'essentiel de cette charge est imputable à l'estimation de la polarimétrie du fouillis entourant la cellule de résolution sous test et cette estimation est commune au TFAC polarimétrique et au filtre polarimétrique réjecteur.

Un tel circuit de traitement polarimétrique associant TFAC polarimétrique, filtre polarimétrique réjecteur et banc de filtres polarimétriques est utilisable avec des radars dotés d'agilité de polarisation ce qui est intéressant surtout pour la fonction de reconnaissance mais présente également des avantages en matière de détection. Le volume des traitements augmente alors dans de notables proportions puisque le nombre de canaux disponibles passe de deux à, respectivement, 3 et 4 dans les cas monostatique et bistatique, correspondant à des ambiances vectorielles (polarisation de fouillis) de dimension 6 ou 10 au lieu de 3. Néanmoins les différents principes de traitements polarimétriques envisagés se généralisent naturellement et, avec eux, les schémas d'association et de sélection décrits. Les critères de choix deviennent cependant inévitablement plus complexes, ne serait-ce qu'en raison de l'incidence de la polarisation émise sur le degré de polarisation du fouillis.

Ce circuit de traitement polarimétrique associant TFAC polarimétrique, filtre polarimétrique réjecteur et banc de filtres polarimétriques peut prendre place dans tout radar de veille opérant depuis une plate-forme quelconque, au sol ou non, par exemple pour du contrôle de trafic aérien.

La polarimétrie radar accroît de façon substantielle la visibilité des cibles, qu'elles soient immergées dans le fouillis ou situées dans le "clair". Il en résulte des allégements des formes d'onde et des traitements fréquentiels, avec pour conséquence bénéfique la possibilité d'utiliser le radar à d'autres tâches pendant le temps ainsi libéré.

**Revendications**

1. Circuit de traitement polarimétrique de détection de cible pour récepteur radar caractérisé en ce qu'il comporte au moins, en parallèle, un TFAC polarimétrique (64) pourvu d'une sortie de détection de cible, et un filtre polarimétrique réjecteur de fouillis (62) associé à un détecteur TFAC (63) pourvu d'une sortie de détection de cible, et un circuit logique de type "ou" (67) réunissant les sorties individuelles de détection de cible du TFAC polarimétrique (64) et du détecteur TFAC (63) placé à la suite du filtre polarimétrique réjecteur (62).

2. Circuit selon la revendication 1, caractérisé en ce qu'il comporte, en parallèle, un TFAC polarimétrique (64) pourvu d'une sortie de détection de cible, un filtre polarimétrique réjecteur de fouillis (62) associé à un détecteur TFAC (63) pourvu d'une sortie de détection de cible et un banc (65) de filtres polarimétriques associés à des détecteurs TFAC (66) pourvus de sorties de détection de cible et un circuit logique de type "ou" (67) réunissant les différentes sorties de détection de cible.

3. Circuit selon la revendication 2, caractérisé en ce qu'il comporte en outre un circuit de sélection (60,61) activant le filtre polarimétrique réjecteur de fouillis (62) et inhibant le banc (65) de filtres polarimétriques lorsque le degré de polarisation du fouillis dépasse un certain seuil et réciproquement inhibant le filtre polarimétrique réjecteur de fouillis (62) et activant le banc (65) de filtres polarimétriques lorsque le degré de polarisation du fouillis est inférieur au-dit seuil.

4. Circuit selon la revendication 3, caractérisé en ce que ledit seuil est choisi dans une plage de degrés de polarisation du fouillis comprise entre 0,6 et 0,8.

5. Circuit selon la revendication 4, caractérisé en ce que ledit seuil est choisi égal à un degré de polarisation du fouillis de 0, 68.

**Patentansprüche**

1. Schaltung zur polarimetrischen Verarbeitung und Erfassung von Zielen für einen Radarempfänger, dadurch gekennzeichnet, daß sie parallel mindestens ein polarimetrisches TFAC (64) mit einem Zielerfassungsausgang und ein polarimetrisches Sperrfilter (62) für Störsignale mit einem nachgeschalteten TFAC-Detektor (63) enthält, der einen Zielerfassungsausgang besitzt, und daß eine logische ODER-Schaltung (67) die individuellen Zielerfassungsausgänge des polarimetrischen TFAC (64) und des dem polarimetrischen Sperrfilter (62) nachgeschalteten TFAC-Detektors (63) zusammenfaßt.

2. Schaltung nach Anspruch 1, dadurch gekennzeichnet, daß sie parallel mindestens ein polarimetrisches TFAC (64) mit einem Zielerfassungsausgang, ein polarimetrisches Sperrfilter (62) für Störsignale mit einem nachgeschalteten TFAC-Detektor (63), der einen Zielerfassungsausgang besitzt, und eine Bank (65) von polarimetrischen Filtern mit nachgeschalteten TFAC-Detektoren (66) enthält, die Zielerfassungsausgänge besitzen, und daß eine logische ODER-Schaltung (67) die individuellen Zielerfassungsausgänge zusammenfaßt.

3. Schaltung nach Anspruch 2, dadurch gekennzeichnet, daß sie weiter eine Auswahlschaltung (60, 61) aufweist, die das polarimetrische Sperrfilter (62) für Störsignale aktiviert und die Bank (65) von polarimetrischen Filtern blockiert, wenn der Polarisationsgrad des Störsignals eine bestimmte Schwelle überschreitet, und umgekehrt das polarimetrische Sperrfilter (62) für Störsignale blockiert und die Bank (65) von polarimetrischen Filtern aktiviert, wenn der Polarisationsgrad des Störsignals unter dieser Schwelle liegt.

4. Schaltung nach Anspruch 3, dadurch gekennzeichnet, daß die Schwelle in einem Bereich von Polarisationsgraden des Störsignals zwischen 0,6 und 0,8 liegt.

5. Schaltung nach Anspruch 4, dadurch gekennzeichnet, daß die Schwelle bei einem Polarisationsgrad des Störsignals von 0,68 liegt.

**Claims**

1. Target detection polarimetric processing circuit for radar receiver characterized in that it comprises at least, in parallel, a polarimetric CFAR (64) provided with a target detection output and a polarimetric clutter-rejection filter (62) associated with a CFAR detector (63) provided with a target detection output, and an "OR" type logic circuit (67) combining the target detection individual outputs of the polarimetric CFAR (64) and of the CFAR detector (63) placed after the polarimetric rejection filter (62).

2. Circuit according to Claim 1, characterized in that it comprises, in parallel, a polarimetric CFAR (64) provided with a target detection output, a polarimetric clutter-rejection filter (62) associated with a CFAR detector (63) provided with a target detection output and a bank (65) of polarimetric filters associated with CFAR detectors (66) provided with target detection outputs, and an "OR" type logic circuit (67) combining the different target detection outputs.

3. Circuit according to Claim 2, characterized in that it further comprises a selection circuit (60, 61) activating the polarimetric clutter-rejection filter (62) and disabling the bank (65) of polarimetric filters when the degree of polarization of the clutter exceeds a certain threshold and conversely disabling the polarimetric clutter-rejection filter (62) and activating the bank (65) of polarimetric filters when the degree of polarization of the clutter is below said threshold.

4. Circuit according to Claim 3, characterized in that said threshold is chosen in a bracket of degrees of polarization of the clutter ranging from 0.6 to 0.8.

5. Circuit according to Claim 4, characterized in that said threshold is chosen to be equal to a degree of polarization of the clutter equal to 0.68.

EP 0 752 597 B1

FIG.1

FIG.2

$Z_A$

$Z_B$

20 DÉTERMINATION DE $\vec{G}$ POUR CHAQUE CELLULE

21 $1/2 \; \vec{G}.\vec{H}_1$

24 DÉTECTEUR TFAC

$PE_1$

22 $1/2 \; \vec{G}.\vec{H}_i$

25 DÉTECTEUR TFAC

$PE_i$

23 $1/2 \; \vec{G}.\vec{H}_n$

26 DÉTECTEUR TFAC

$PE_n$

27

PE

EP 0 752 597 B1

FIG.3

S/F = 8,8 dB

FIG. 4

EP 0 752 597 B1

S/F = 12,8

FIG.5

FIG.6